# EUROPÄISCHE PATENTSCHRIFT

(11) **EP 1 046 973 B1**
(45) Veröffentlichungstag und Bekanntmachung des Hinweises auf die Patenterteilung: **05.10.2005**
(21) Anmeldenummer: 00201023.9
(22) Anmeldetag: 21.03.2000
(51) Int. Cl.: G05D 23/02, F16K 31/60

(54) **Heizungsventil-Thermostataufsatz**
Thermostatic device for a heating valve
Dispositif thermostatique pour un robinet de chauffage

(30) Priorität: 20.04.1999 DE 19917781
(43) Veröffentlichungstag der Anmeldung: 25.10.2000
(73) Patentinhaber: Danfoss A/S, 6430 Nordborg (DK)
(72) Erfinder: Nielsen, Kuno, 8600 Silkeborg (DK)

(56) Entgegenhaltungen:
- DE-A- 2 457 931
- DE-A- 2 518 443
- DE-A- 2 537 033
- DE-B- 1 094 543
- US-A- 4 216 902
- US-A- 4 508 262

## Beschreibung

Die Erfindung betrifft einen Heizungsventil-Thermostataufsatz mit einem Gehäuse, in dem ein Thermostatelement angeordnet ist, das einen Druckraum aufweist, dessen Volumen sich in Abhängigkeit von der Temperatur verändert, mit einem Betätigungselement, das mit dem Thermostatelement in Wirkverbindung steht, und mit einer Sicherheitsanordnung, die eine Überdruckfeder aufweist.

Derartige Heizungsventil-Thermostataufsätze sind millionenfach am Markt eingeführt. Als Beispiel wird auf DE 27 48 412 A1 DE 24 57 931 A, DE 25 18 443 A, US 42 16 902 A und DE 10 94 543 verwiesen.

Dokument DE 24 57 931 A offenbart, insbesondere, eine Sicherheitsanordnung mit einer Überdruckfeder die zwischen einem Gehäuseteil und dem Thermostatelement angeordnet ist und das Thermostatelement in Richtung Betätigungselement vorspannt, wobei das Thermostatelement in einem rohrförmigen Trägerteil aufgenommen ist.

Ein derartiger Heizungsventil-Thermostataufsatz ist am Ventil eines Heizkörpers (oder auch einer Fußbodenheizung) befestigt. Das Heizungsventil weist beispielsweise einen Stößel auf, der durch eine im Ventil angeordnete Feder nach außen gedrückt wird. In die andere Richtung wird der Stößel vom Betätigungselement gedrückt. Je stärker der Stößel eingedrückt wird, desto stärker drosselt das Ventil. Wenn man davon ausgeht, daß sich bei zunehmenden Temperaturen das Volumen des Thermostatelements vergrößert, dann wird in diesem Fall das Betätigungselement in Richtung auf den Stößel bewegt und der Zustrom von Wärmeträgerflüssigkeit wird gedrosselt.

Es können nun Situationen auftreten, in denen das Heizungsventil bereits vollständig geschlossen ist, aufgrund einer auf anderen Ursachen beruhenden Temperaturerhöhung im Raum das Volumen des Thermostatelementes aber weiter vergrößert wird. Derartige Ursachen können beispielsweise eine intensive Sonneneinstrahlung oder auch eine Vielzahl von Personen sein, die im Raum anwesend sind. Bei einer derartigen Volumenzunahme des Thermostatelementes könnte es zu Beschädigungen im Ventilaufsatz oder im Ventil selbst kommen. Um dies zu verhindern, ist das Betätigungselement im bekannten Fall als Druckfeder ausgebildet, die bei einer Temperaturerhöhung komprimiert werden kann. Damit kann zwar die Kraft aufgenommen werden, die durch die Temperaturerhöhung bedingt ist. Gleichzeitig muß aber das Betätigungselement eine gewisse axiale Länge aufweisen, um überhaupt komprimiert werden zu können. Dies vergrößert die Baulänge des Thermostataufsatzes.

Der Erfindung liegt die Aufgabe zugrunde, die Baulänge kleinzuhalten.

Diese Aufgabe wird bei einem Heizungsventil-Thermostataufsatz der eingangs genannten Art durch die Merkmale des kennzeichenden Teils des Anspruchs 1 gelöst.

Mit dieser Ausgestaltung ist es nicht mehr nötig, eine Druckfeder als Betätigungselement zu verwenden. Dementsprechend benötigt man auch keinen axialen Bauraum mehr, der bereitgehalten werden muß, damit man eine derartige Feder komprimieren kann. Die Überdruckfeder ist vielmehr an einer anderen Stelle angeordnet und zwar so, daß bei einer Druckerhöhung das Thermostatelement nach außen, d.h. weg von dem Heizkörperventil, verlagert werden kann. Damit läßt sich die Funktion der Betätigung des Stößels des Heizkörperventils und die Funktion der Überdrucksicherung entkoppeln. Beide Funktionen können dann durch Bauelemente realisiert werden, die ganz konkret auf ihre Aufgabe hin angepaßt sind. Dies hat den zusätzlichen Vorteil, daß auch das Regelverhalten des Thermostataufsatzes verbessert werden kann. Man kann also bisher bekannte und bewährte Thermostatelemente verwenden und die Baulänge trotzdem kurz halten, da für die Bewegung des Thermostatelements im Innern des Aufsatzes im Überdruckfall kein Platz mehr erforderlich ist. Der Thermostataufsatz benötigt daher weniger Raum, was sowohl von der Einbaubarkeit her als auch von der äußeren Erscheinung her Vorteile bietet. Gleichzeitig verringert sich die Gefahr, daß eine Person gegen den in den Raum ragenden Thermostatventilaufsatz stößt und ihn beschädigt. Das herkömmliche Thermostatelement ist allerdings üblicherweise als Kapsel ausgebildet, die nur eine begrenzte mechanische Festigkeit aufweist. Das Anbringen von Widerlagern für die Überdruckfeder ist zwar nicht ausgeschlossen, würde jedoch den Herstellungsaufwand erhöhen. Wenn man nun das Thermostatelement in einem Trägerteil unterbringt, dann reicht es aus, das Thermostatelement in diesem Trägerteil zu befestigen, beispielsweise durch Klemmen oder Kleben. Das Trägerteil kann beispielsweise aus Kunststoff gebildet sein. In diesem Fall ist es relativ einfach, die entsprechenden Vorsprünge oder Ansätze auszuformen, an denen sich dann die Überdruckfeder abstützen kann.

Die Überdruckfeder umgibt das Thermostatelement in Umfangsrichtung. Damit ist für die Überdruckfeder selbst überhaupt kein zusätzlicher axialer Bauraum notwendig. Dennoch läßt sich die Funktionen der Überdruckfeder zuverlässig erfüllen. Wenn die Überdruckfeder das Thermostatelement in Umfangsrichtung umgibt, dann hat sie automatisch einen relativ großen Durchmesser und kann durch das Thermostatelement geführt werden, so daß ihre Dimensionierung relativ einfach wird.

Vorzugsweise ist das Gehäuseteil als Teil eines Drehgriffs ausgebildet und drehbar in einem Sockelteil gelagert. Mit dieser Ausgestaltung wird es möglich, den vom Thermostatelement vorgegebenen oder vorgebbaren Sollwert zu verändern. Das Thermostatelement ist im Drehgriff gelagert. Wenn der Drehgriff im Sockelteil verdreht wird, dann ändert sich die axiale Position des Thermostatelementes relativ zu dem Sockelteil und damit relativ zu dem Heizkörperventil.

Hierbei ist bevorzugt, daß das Betätigungselement durch eine Hilfsfeder in Richtung auf das Thermostatelement belastet ist, wobei sich die Hilfsfeder im Sockelteil abstützt. Diese Ausbildung hat vor allem für die Montage Vorteile. Sämtliche Teile werden durch die Federn zusammengehalten. Auch im Betrieb hat diese Ausbildung Vorteile, weil die im Heizkörperventil angeordneten Federn nur noch dafür sorgen müssen, daß die entsprechenden Ventilelemente in die gewünschten Stellungen verschoben werden.

Vorzugsweise weisen das Trägerteil und das Gehäuseteil eine in Axialrichtung zusammenwirkende Anschlaganordnung auf, die den Hub der Überdruckfeder begrenzt. Die Überdruckfeder kann dann das Gehäuseteil und das Trägerteil nicht weiter auseinander drücken, als es durch die Anschlaganordnung zugelassen wird. Damit bildet der Thermostatventilaufsatz nach dem Zusammenbau eine Einheit, die nicht ohne weiteres wieder aufgelöst werden kann.

Vorteilhafterweise sind das Trägerteil und das Gehäuseteil drehfest zusammengesetzt. Wenn also der Drehgriff verdreht wird, dann dreht sich das Gehäuseteil und das Trägerteil zusammen mit, wobei auch das Thermostatelement mitgedreht werden kann. Für die Überdruckfeder bleiben damit definierte Lagerbedingungen erhalten. Auch wird die Belastung des Thermostatelements klein gehalten.

Vorzugsweise weisen das Thermostatelement oder das Trägerteil an einem der Stirnseite des Gehäuseteils benachbarten Bereich eine Anzeigeeinrichtung auf. Man kann dann Situationen erkennen oder signalisieren, in denen der besagte Überdruck aufgetreten ist. Sollte sich ein derartiger Überdruck zeigen, ist dies ein Hinweis darauf, daß das Ventil geschlossen ist und man sozusagen eine Gratiswärme bekommt. Bei zu hoher Temperatur ist der Benutzer in der Regel versucht, das Ventil durch Drehen am Drehgriff zu schließen. Dies würde in derartigen Situationen nur den Aufsatz verschließen, ohne den Zustand zu ändern. Durch die Anzeige kann man dies signalisieren.

In einer bevorzugten Ausgestaltung ist vorgesehen, daß die Anzeigeeinrichtung als Farbmarkierung ausgebildet ist. Wenn also durch einen Überdruck das Thermostatelement vom Ventil weg geschoben wird, dann wird es ein wenig aus dem Gehäuseteil herausgedrückt. Dies läßt sich im einfachsten Fall durch eine Farbmarkierung, beispielsweise einen roten Streifen, sichtbar machen. Weitere Maßnahmen sind nicht notwendig.

In einer bevorzugten Ausgestaltung weist das Betätigungselement an seinem dem Thermostatelement abgewandten Ende eine flanschartige Durchmesservergrößerung auf. Diese Durchmesservergrößerung kann als angesetzte Platte ausgebildet sein. Sie kann aber auch einstückig mit dem Betätigungselement ausgebildet sein. Sie kann mehrere Funktionen erfüllen. Zum einen kann in der Durchmesservergrößerung die Anlagefläche für den Ventilstößel ausgebildet sein. Darüber hinaus kann die Durchmesservergrößerung auch zur Anlagefläche für die Hilfsfeder verwendet werden. Eine besonders vorteilhafte Wirkung ergibt sich aber dann, wenn die Durchmesservergrößerung eine Abschirmung gegen die Wärmestrahlung vom Heizkörperventil zum Thermostatelement bildet. In diesem Fall wird das Thermostatelement, was erwünscht ist, überwiegend durch die Raumtemperatur beeinflußt. Man kann den die Durchmesservergrößerung bildenden Teller auch noch mit einer Reflexionsschicht, beispielsweise aus Aluminium versehen, so daß die Wärmeabschirmung noch weiter verbessert wird.

Vorzugsweise ist das Betätigungselement als massiver Körper ausgebildet. Dieser wird weder bei der Betätigung durch das Thermostatelement noch beim Auftreten einer Überdrucksituation nach Art einer Druckfeder verformt. Dementsprechend können sämtliche Volumenveränderungen des Thermostatelementes unmittelbar an das Heizkörperventil weitergegeben werden. Das Betätigungselement kann beispielsweise als Kunststoffteil ausgebildet sein, das durch Spritzguß hergestellt worden ist.

Die Erfindung wird im folgenden anhand eines bevorzugten Ausführungsbeispiels in Verbindung mit der Zeichnung näher beschrieben. Hierin zeigen:
- Fig. 1: eine Schnittansicht durch einen Heizungsventil-Thermostataufsatz und
- Fig. 2: eine entsprechende Schnittansicht bei Auftreten eines Überdrucks.

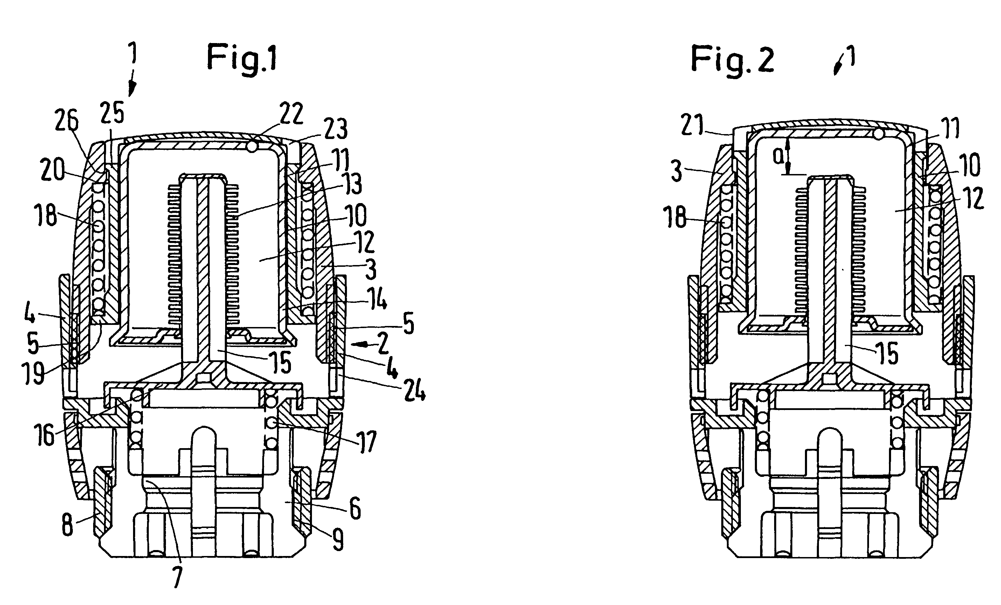

Ein Heizungsventil-Thermostataufsatz 1 ist in Fig. 1 dargestellt bei einer Umgebungstemperatur von 22°C, was dem Sollwert entspricht, der durch den Aufsatz 1 im Raum geregelt werden soll. In Fig. 2 ist der gleiche Thermostatventilaufsatz für eine Umgebungstemperatur von etwa 32°C dargestellt, also eine Situation, in der, was unten näher erläutert wird, ein Überdruck aufgetreten ist.

Der Thermostatventilaufsatz 1 weist ein Gehäuse 2 auf, das durch einen Drehgriff 3 und einen Sockelteil 4 gebildet ist. Der Drehgriff 3 ist mit dem Sockelteil 4 über ein Gewinde 5 verbunden. Wenn also der Drehgriff 3 gedreht wird, dann ändert sich seine axiale Position gegenüber dem Sockelteil 4.

Der Sockelteil 4 weist einen Anschlußstutzen 6 auf mit einer Eingriffsgeometrie 7, mit der er an einem nicht näher dargestellten Heizkörperventil befestigt werden kann. Zur Festlegung dient eine Überwurfmutter 8, die den Anschlußstutzen 6 umgibt und durch Drehen auf einem Gewinde 9 axial auf dem Anschlußstutzen verlagert werden kann.

Im Drehgriff 3 ist ein Trägerteil 10 angeordnet, das seinerseits ein Thermostatelement 11 trägt. Das Thermostatelement 11 weist einen Druckraum 12 auf, der radial innen durch ein einseitig offenes Balgenrohr begrenzt ist. Die Wand des Balgenrohres 13 ist verformbar. Im übrigen ist das Thermostatelement 11 durch eine Kapsel gebildet, deren Wand 14 praktisch unverformbar ist.

In das Balgenrohr 13 ist eine Spindel 15 eingesteckt, die im montierten Zustand als Betätigungselement wirkt.

Die Spindel 15 weist an ihrem dem Thermostatelement abgewandten Ende eine Durchmesservergrößerung 16 auf, die als Anlagefläche für eine Hilfsfeder 17 dient, die am Sockelteil 4 abgestützt ist und die Spindel 15 in Richtung auf das Thermostatelement 11 vorspannt. Die Hilfsfeder 17 ist allerdings relativ schwach dimensioniert, d.h. die von ihr erzeugten Reaktionskräfte sind relativ klein. Die Durchmesservergrößerung 16 dient auch als thermische Abschirmung. Wärme, die aus dem Bereich der Eingriffgeometrie 7 abstrahlt, wird vom Thermostatelement 1 fern gehalten. Die Abschirmung kann noch durch eine reflektierende Schicht, beispielsweise aus Aluminium, verbessert werden.

Das Trägerteil 10 ist von einer Überdruckfeder 18 umgeben, die zwischen einem Flansch 19 am Trägerteil und einem Flansch 20 am Drehgriff eingespannt ist und das Thermostatelement 11 in Richtung auf das Sockelteil 4 drückt. Die Bewegung des Thermostatelements 11 in Richtung auf das Sockelteil 4 wird durch eine Anschlaganordnung begrenzt, die einen ersten Anschlag 25 am Trägerteil 10 und einen zweiten Anschlag 26 am Drehgriff 3 aufweist. Damit ist also eine Hubbegrenzung für die Feder 18 vorgesehen.

In nicht näher dargestellter Weise sind das Trägerteil 10 und der Drehgriff 3 drehfest miteinander verbunden.

Im in Fig. 1 dargestellten "Normalzustand" nimmt die Überdruckfeder 18 ihre größte Länge ein. Drehgriff 3, Trägerteil 10 und Thermostatelement 11 bilden eine Einheit, deren axiale Position durch Verdrehen des Drehgriffs 3 im Sockelteil verändert werden kann. Damit wird auch der Sollwert verändert, der vom Thermostatelement 11 vorgegeben wird.

Der Druckraum 12 ist mit einer Flüssigkeit gefüllt, deren Volumen sich in Abhängigkeit von der Temperatur ändert. Wenn die Temperatur absinkt, dann wird das Volumen des Druckraumes kleiner. Die Spindel 15 kann unter der Wirkung der Hilfsfeder 17 weiter in das Thermostatelement 11 hineingeschoben werden. Gegebenenfalls wird diese Bewegung auch durch eine Rückstellfeder des nicht näher dargestellten Heizkörperventils unterstützt. Je weiter die Spindel 15 in den Druckraum 12 eingeschoben werden kann, desto stärker öffnet das Ventil.

Wenn sich hingegen die Temperatur erhöht, dann vergrößert sich das Volumen der Flüssigkeit im Druckraum 12 und die Spindel 15 wird nach unten (bezogen auf die Darstellung der Fig. 1) geschoben. Hierbei kann sich das Balgenrohr 13 etwas verformen. Diese Bewegung der Spindel 15 führt zu einer stärkeren Drosselung des Heizkörperventils.

Wenn sich nun, wie in Fig. 2 dargestellt, das Heizkörperventil bereits in der geschlossenen Situation befindet, die Temperatur aber weiter ansteigt, beispielsweise durch eine intensive Sonneneinstrahlung in den Raum oder durch die Anwesenheit von vielen Personen, von denen jede als Wärmequelle wirkt, dann würde der Druckanstieg bzw. die Volumenvergrößerung der Flüssigkeit im Druckraum 12 zu einer Beschädigung des Thermostatelementes und/oder des Heizkörperventils führen.

In diesem Fall führt die Volumenvergrößerung der Flüssigkeit im Druckraum 12 dazu, daß die Spindel 15 weiter aus dem Thermostatelement 11 herausgedrückt wird. Da die Spindel 15 aber nicht weiter ausweichen kann, wird die Überdruckfeder 18 komprimiert und das Thermostatelement 11 wandert mit seinem Trägerteil 10 aus dem Drehgriff 3 axial heraus. Dies ist unter anderem auch daran erkennbar, daß ein Abstand a zwischen dem Boden des Balgenrohres und der gegenüberliegenden Stirnseite des Thermostatelementes 11 in Fig. 2 größer als in Fig. 1 ist.

Man kann nun die Umfangswand des Trägerteiles 10 in diesem Bereich 21 mit einer Farbmarkierung versehen, beispielsweise einem roten Ring. Dieser wird bei derartigen Überdrucksituationen sichtbar. Dadurch wird angezeigt, daß das Heizkörperventil bereits geschlossen ist und ein Drehen am Drehgriff keine Änderung bewirken würde. Durch die geschilderte Ausgestaltung, bei der ein Überdruck im Druckraum 12 dazu führt, daß sich das Thermostatelement 11 weg vom Heizkörperventil bewegt, wird sichergestellt, daß kein axialer Bauraum notwendig ist, der für eine Ausweichbewegung des Thermostatelementes im Innern des Thermostatventilaufsatzes 1 bereit gehalten werden muß. Man kann daher bekannte Thermostatelemente 11 verwenden und trotz gleicher Thermostatelemente 11 eine kürzere axiale Baulänge vorsehen.

Die zusätzlichen Teile, die benötigt werden, können relativ einfach gefertigt werden. Sowohl der Drehgriff 3 als auch das Trägerteil 10 ist als Rohrkörper ausgebildet weist. Das Trägerteil 10 zusätzlich noch eine Abdeckung 22 der Stirnseite des Thermostatelements 11 auf, so daß das Thermostatelement 11 recht gut geschützt ist. Über Öffnungen 23 und 24 wird die Zufuhr von Umgebungsluft zum Thermostatelement 11 gewährleistet .

## Patentansprüche

1. Heizungsventil-Thermostataufsatz (1) mit einem Gehäuse (2), in dem ein Thermostatelement (11) angeordnet ist, das einen Druckraum (12) aufweist, dessen Volumen sich in Abhängigkeit von der Temperatur verändert, mit einem Betätigungselement (15), das mit dem Thermostatelement (11) in Wirkverbindung steht, und mit einer Sicherheitsanordnung, die eine Überdruckfeder (18) aufweist, wobei die Überdruckfeder (18) zwischen dem Thermostatelement (11) und einem Gehäuseteil (3) angeordnet ist und das Thermostatelement (11) in Richtung auf das Betätigungselement (15) vorspannt, **dadurch gekennzeichnet, daß** das Thermostatelement (11) in einem rohrförmigen Trägerteil (10) aufgenommen ist, das gleichzeitig als Widerlager für die Überdruckfeder (18) dient und eine Abdeckung (22) der Stirnseite des Thermostatelements (11) aufweist, wobei das Trägerteil (10) lediglich die Stirnseite und einen Teil der sich daran anschließenden äußeren Mantelfläche des Thermostatelementes (11) in axialer Richtung überdeckt.

2. Aufsatz nach Anspruch 1, **dadurch gekennzeichnet, daß** die Überdruckfeder (18) das Thermostatelement (11) in Umfangsrichtung umgibt.

3. Aufsatz nach Anspruch 1 oder 2, **dadurch gekennzeichnet, daß** das Gehäuseteil (3) als Teil eines Drehgriffs ausgebildet und drehbar in einem Sockelteil (4) gelagert ist.

4. Aufsatz nach Anspruch 3, **dadurch gekennzeichnet, daß** das Betätigungselement (15) durch eine Hilfsfeder (17) in Richtung auf das Thermostatelement (11) belastet ist, wobei sich die Hilfsfeder (17) im Sockelteil (4) abstützt.

5. Aufsatz nach einem der Ansprüche 1 bis 4, **dadurch gekennzeichnet, daß** das Trägerteil (10) und das Gehäuseteil (3) eine in Axialrichtung zusammenwirkende Anschlaganordnung (25, 26) aufweisen, die den Hub der Überdruckfeder (18) begrenzt.

6. Aufsatz nach einem der Ansprüche 1 bis 5, **dadurch gekennzeichnet, daß** das Trägerteil (10) und das Gehäuseteil (3) drehfest zusammengesetzt sind.

7. Aufsatz nach einem der Ansprüche 1 bis 6, **dadurch gekennzeichnet, daß** das Thermostatelement (11) oder das Trägerteil (10) an einem der Stirnseite des Gehäuseteils (3) benachbarten Bereich (21) eine Anzeigeeinrichtung aufweist.

8. Aufsatz nach Anspruch 7, **dadurch gekennzeichnet, daß** die Anzeigeeinrichtung als Farbmarkierung ausgebildet ist.

9. Aufsatz nach einem der Ansprüche 1 bis 8, **dadurch gekennzeichnet, daß** das Betätigungselement (15) an seinem dem Thermostatelement (11) abgewandten Ende eine flanschartige Durchmesservergrößerung (16) aufweist.

10. Aufsatz nach einem der Ansprüche 1 bis 9, **dadurch gekennzeichnet, daß** das Betätigungselement (15) als massiver Körper ausgebildet ist.

## Claims

1. Heating valve thermostat top part (1) with a housing (2), in which a thermostat element (11) is located, which has a pressure chamber (12), whose volume changes in dependence of the temperature, with an actuating element (15) interacting with the thermostat element (11), and with a safety device, which has an overpressure spring (18), the overpressure spring (18) being located between the thermostat element (11) and a housing part (3) and prestressing the thermostat element (11) in the direction of the actuating element (15), **characterised in that** the thermostat element (11) is accommodated in a pipe-shaped support part (10), which at the same time serves as counter flange for the overpressure spring (18) and has a cover (22) for the front side of the thermostat element (11), the support part (10) merely covering the front side and a part of the neighbouring outer circumferential surface of the thermostat element (11) in the axial direction.

2. Top part according to claim 1, **characterised in that** the overpressure spring (18) surrounds the thermostat element (11) in the circumferential direction.

3. Top part according to claim 1 or 2, **characterised in that** the housing part (3) is made as a part of a twist handle and is rotatably supported in a socket part (4).

4. Top part according to claim 3, **characterised in that** the actuating element (15) is loaded by an auxiliary spring (17) in the direction of the thermostat element (11), the auxiliary spring (17) being supported in the socket part (4).

5. Top part according to one of the claims 1 to 4, **characterised in that** the support part (10) and the housing part 3 have a stop arrangement (25, 26) interacting in the axial direction, said stop arrangement limiting the stroke of the overpressure spring (18).

6. Top part according to one of the claims 1 to 5, **characterised in that** the support part (10) and the housing part (3) are unrotatably connected.

7. Top part according to one of the claims 1 to 6, **characterised in that** in an area (21) neighbouring the front side of the housing part (3), the thermostat element (11) or the support part (10) has a display arrangement.

8. Top part according to claim 7, **characterised in that** the display arrangement has the form of a colour marking.

9. Top part according to one of the claims 1 to 8, **characterised in that** the end of the actuating element (15) facing away from the thermostat element (11) carries a flange-like diameter increase (16).

10. Top part according to one of the claims 1 to 9, **characterised in that** the actuating element (15) is made as a solid body.

## Revendications

1. Dispositif thermostatique (1) pour vanne de chauffage, comportant un boîtier (2), dans lequel est agencé un élément thermostatique (11), qui comporte une chambre de pression (12) dont le volume varie en fonction de la température, comportant un élément de manoeuvre (15) qui est en liaison active avec l'élément thermostatique (11), et comportant un système de sécurité qui est muni d'un ressort de sûreté (18), le ressort de sûreté (18) étant agencé entre l'élément thermostatique (11) et une partie du boîtier (3) et l'élément thermostatique (11) étant précontraint dans la direction vers l'élément de manoeuvre (15), **caractérisé en ce que** l'élément thermostatique (11) est reçu dans un support (10) tubulaire qui fait en même temps fonction de contre-butée pour le ressort de sûreté (18) et comporte un cache (22) de la face frontale de l'élément thermostatique (11), le support (10) recouvrant dans la direction axiale uniquement la face frontale et une partie de la paroi latérale extérieure adjacente de l'élément thermostatique (11).

2. Dispositif thermostatique selon la revendication 1, **caractérisé en ce que** le ressort de sûreté (18) entoure l'élément thermostatique (11) dans le sens périphérique.

3. Dispositif thermostatique selon la revendication 1 ou 2, **caractérisé en ce que** la partie de boîtier (3) est conçue comme une partie d'une poignée rotative et est montée rotative dans un socle (4).

4. Dispositif thermostatique selon la revendication 3, **caractérisé en ce que** l'élément de manoeuvre (15) est sollicité par un ressort auxiliaire (17) en direction de l'élément thermostatique (11), le ressort auxiliaire (17) étant en appui dans le socle (4).

5. Dispositif thermostatique selon l'une quelconque des revendications 1 à 4, **caractérisé en ce que** le support (10) et la partie de boîtier (3) comportent un système de butée (25, 26), coopérant dans le sens axial et limitant la course du ressort de sûreté (18).

6. Dispositif thermostatique selon l'une quelconque des revendications 1 à 5 **caractérisé en ce que** le support (10) et la partie du boîtier (3) sont assemblés de manière rotative.

7. Dispositif thermostatique selon l'une quelconque des revendications 1 à 6 **caractérisé en ce que** l'élément thermostatique (11) ou le support (10) sont munis d'un dispositif d'affichage dans une zone (21) à proximité de la face frontale de la partie de boîtier (3).

8. Dispositif thermostatique selon la revendication 7, **caractérisé en ce que** le dispositif d'affichage est conçu sous forme de repère de couleur.

9. Dispositif thermostatique selon l'une quelconque des revendications 1 à 8, **caractérisé en ce que** l'élément de manoeuvre (15) comporte un élargissement de diamètre (16) en forme de collerette sur son extrémité opposée à l'élément thermostatique (11).

10. Dispositif thermostatique selon l'une quelconque des revendications 1 à 9, **caractérisé en ce que** l'élément de manoeuvre (15) est conçu sous forme de corps massif.
